# EUROPEAN PATENT SPECIFICATION

(11) **EP 1 171 324 B1**
(45) Date of publication and mention of the grant of the patent: **27.10.2004**
(21) Application number: 00916723.0
(22) Date of filing: 11.04.2000
(51) Int. Cl.: B60K 15/035

(54) **FILL LIMIT CONTROL VALVE ASSEMBLY HAVING A LIQUID FUEL TRAP**
FÜLLBEGRENZUNGSVENTILANORDNUNG MIT FLÜSSIGKRAFTSTOFFFALLE
ENSEMBLE DE VANNES DE CONTROLE DE LA LIMITE DE REMPLISSAGE COMPORTANT UN PIEGE A CARBURANT LIQUIDE

(30) Priority: 16.04.1999 US 129560 P
(43) Date of publication of application: 16.01.2002
(73) Proprietor: Tesma International Inc., Concord, Ontario L4K 3M3 (CA)
(72) Inventor: GERICKE, Michael, Schomberg, Ontario L0G 1T0 (CA)
(74) Representative: Kovac, Werner
(86) International application number: PCT/CA2000/000381
(87) International publication number: WO 2000/063042

(56) References cited:
- EP-A- 0 773 128
- GB-A- 2 238 041
- US-A- 5 413 137

## Description

### Field of the Invention

The present invention relates to a valve which controls the fuel level, the venting and traps fuel vapors from an automotive vehicle fuel tank to a fuel canister, or the like, and which prevents escape of liquid fuel from the fuel tank in the event of rollover of the vehicle.

### Background of the Invention

A fill limit control valve, which is normally disposed in a vehicle fuel tank, frequently comprises a housing having a valve portion for sealing engagement about a hole in a fuel tank and a float portion extending into the fuel tank. The type of valve to which the subject invention pertains responds to the level of liquid fuel in the fuel tank, staying open to vent vapor as long as the fuel level is below a predetermined level. These are sometimes referred to as "fill control" or "shutoff" valves, since closing thereof creates a sudden pressure increase in the tank thereby preventing further refueling.

The valve portion defines a vent opening for venting vapors from the fuel tank and a vapor outlet for conveying fuel vapors to a vapor canister. A float is movably supported by the float portion for seating against and closing the vent opening in response to the float rising to a predetermined fuel level. Examples of such prior art assemblies are shown in U. S. Patent Nos. 5,590,697 to Benjey et al. and 5,860,458 to Benjey et al.

Sometimes these valves are supplemented with a gravity-responsiverollover device supported at the bottom of the float portion for engaging and moving the float upwardly to seal the vent opening in response to a predetermined amount of deviation from vertical, e.g., a rollover. An example of such a prior art assembly is shown in U.S. Patent No. 5,809,976 to Cook et al.

A fill limit control valve assembly including the features of the preamble of claim 1 is known from US-A-5 413 137.

Although all of these assemblies may perform satisfactorily, liquid fuel may inadvertently pass through the valve and into the vapor canister. Influx of liquid into the vapor canister, can prematurely saturate the canister and pollute the environment. Hence, there remains a need to reduce and virtually eliminate the amount of liquid fuel that passes out of the valve during normal operation.

### Summary of the Invention

The disadvantages of the prior art may be overcome by providing a fill limit control valve assembly disposed in a vehicle fuel tank. The fill limit control valve assembly has a housing having a valve portion for connection to a fuel tank and a float portion for extending into the fuel tank. The valve portion defines a vent opening for venting vapors from the fuel tank. A float is movably supported by the float portion for movement between an open position spaced from the vent opening and a closed position seating against and sealing the vent opening in response to the float rising to a predetermined fuel level. A liquid fuel trap is disposed above the vent opening to limit liquid fuel flow through the vapor outlet.

The fill limit control valve assembly further includes the features of the characterizing part of claim 1.

Accordingly, the subject invention provides a fill limit control valve that minimizes and virtually eliminates the undesirable flow of liquid fuel into a vapor canister. Hence, only fuel vapors pass through the valve and into the canister.

According to another aspect of the invention, there is provided a fill limit control valve assembly having a float which traps vapor during normal fuel filling to enable the float to become buoyant and responsively move to a closed position and which collects liquid fuel when in an inverted rollover condition to prevent buoyancy and responsively move to the closed position.

### Brief Description of the Drawings

Other advantages of the present invention will be readily appreciated as the same becomes better understood by reference to the following detailed description when considered in connection with the accompanying drawings wherein:
Figure 1 is an environmental view showing the subject invention combined with an automotive vehicle fuel tank;
Figure 2 is perspective view of a fill limit control valve in accordance with the subject invention;
Figure 3 is an enlarged perspective view in cross section of the subject valve in an open position;
Figure 4 is an enlarged perspective view in cross section of the subject valve in a closed position; and
Figure 5 is an enlarged perspective view in cross section of the subject valve in a closed and rollover position.

### Detailed Description of the Preferred Embodiment

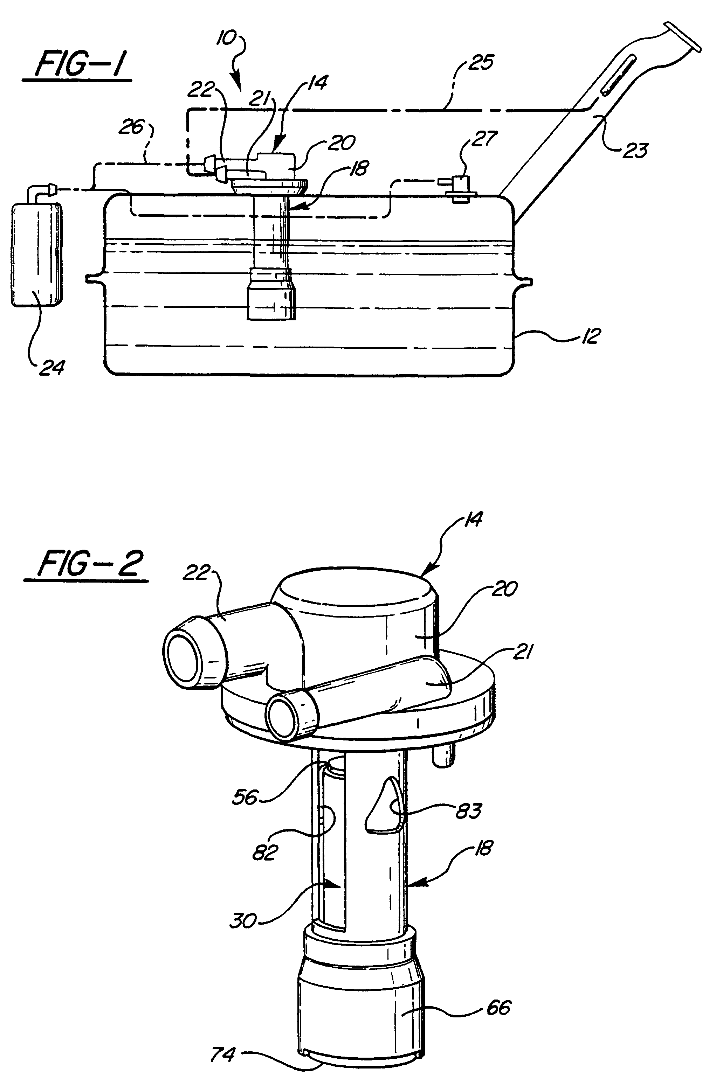

Referring to the Figures, wherein like numerals indicate like or corresponding parts throughout the several views, a fill limit control valve assembly is generally shown at 10 disposed within a vehicle fuel tank 12 in Figure 1.

The valve assembly 10 includes a housing, generally indicated at 14, having a float portion, generally indicated at 18, adapted for extending into the fuel tank 12. The housing 14 includes a mounting cap 20 defining a vapor outlet connector 22 for conveying vapors to a vapor canister 24 via line 26. A recirculation pipe 21 is also provided on the cap 20 for recirculating vapors into a filler neck 23 via a second line 25. In addition, a rollover valve 27 may be mounted to the fuel tank 12 and connected to the vapor canister 24 as is known in the art.

The mounting cap 20 has a mounting face which abuts the fuel tank 12 to secure the valve assembly 10 to the fuel tank 12 in any suitable manner. The vapor canister 24, which is typically a carbon canister, rollover valve 27, and fuel tank 12 are of any suitable design as is known in the art. For illustrative purposes, the lines 25, 26 are shown schematically.

Referring to Figure 2, the float portion 18 is a cylindrical column and includes a float 30 movably supported therein. The float portion 18 defines a number of openings 82, 83 for providing fluid communication between the fuel tank 12 and the float 30. As illustrated, the openings 82 have a rectangular configuration and opening 83 has a triangular configuration. Preferably there are two rectangular openings 82 and two triangular openings 83 diametrically opposed on the float portion 18.

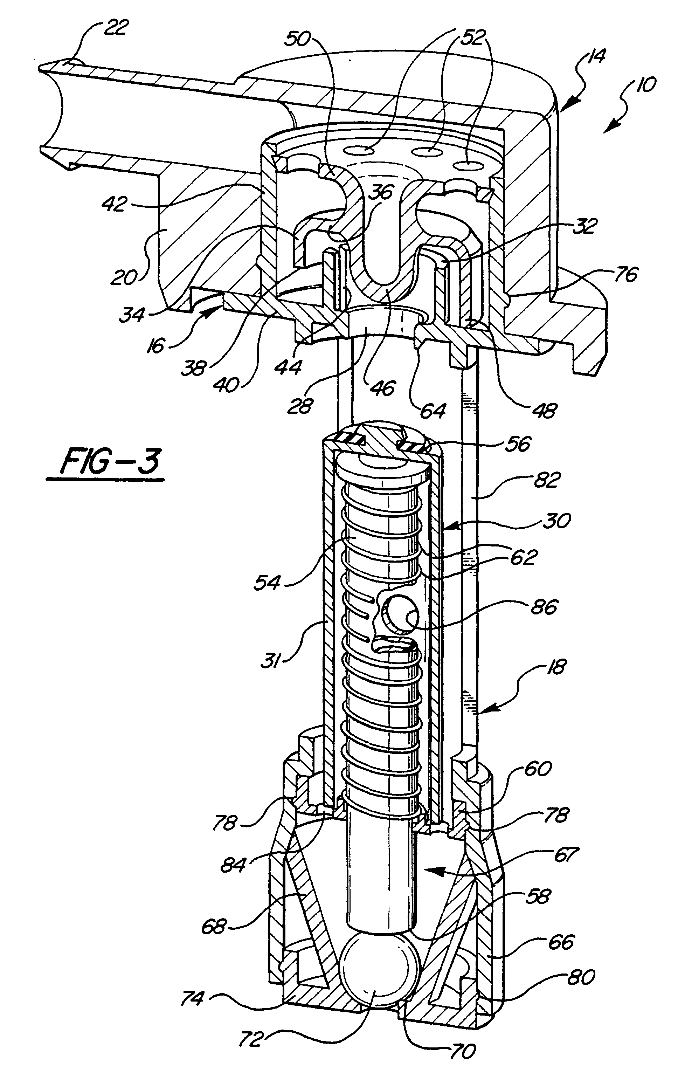

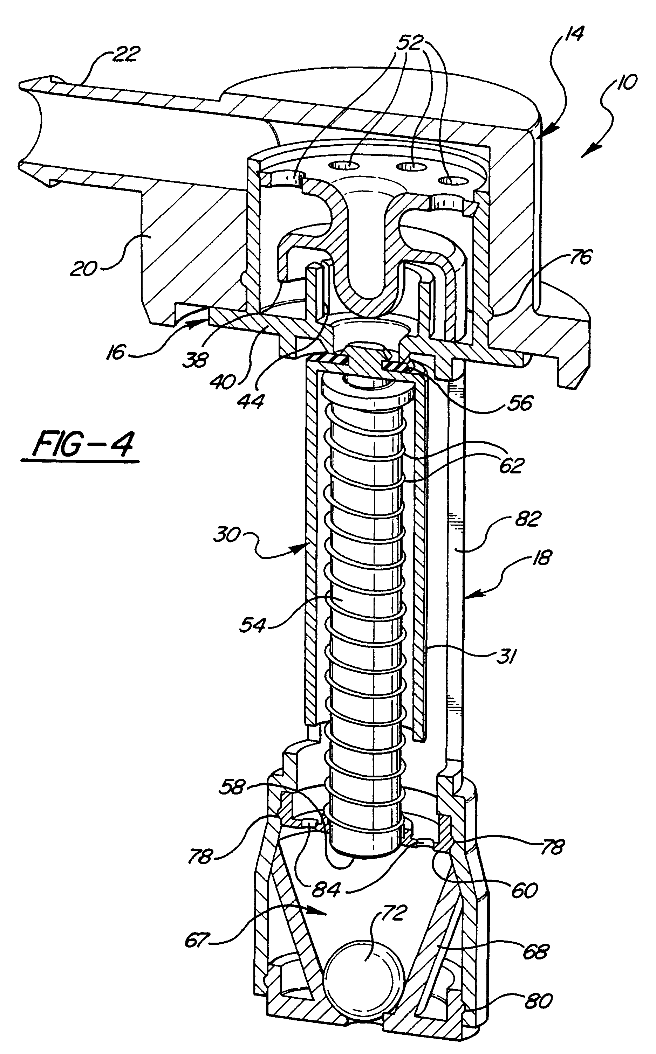

Referring to Figures 3 and 4, the valve assembly 10 also includes a valve portion 16, adapted for connection to the fuel tank 12. The mounting cap 20 encompasses at least a portion of the valve portion 16. The valve portion 16 defines a vent opening 28 for venting vapors from the fuel tank 12 to the vapor canister 24 via outlet connector 22 and line 26.

The valve assembly 10 is characterized by a liquid fuel trap disposed above the vent opening 28 to limit liquid fuel flow through the outlet connector 22. The fuel trap includes a baffle barrier 32 surrounding the vent opening 28. A return cup 34 having a base 36 overlies the baffle barrier 32 with a depending rim 38 surrounding the baffle barrier 32 for forcing the flow of vapor from the vent opening 28 through a U-turn. The return cup 34 includes legs 48 extending downwardly from the rim 38 to support the fuel trap in the valve portion 16. The return cup 34 also includes a bullet 46 extending from the base 36 thereof and into the baffle barrier 32 to define an annular passage for dividing the flow of vapors from the vent opening 28. The bullet 46 extends above the base 36 of the return cup 34 and an annular flange 50 extends radially of the bullet 46. The flange 50 has passages 52 therethrough for the passage of vapors through the flange 50. The return cup 34, base 36, bullet 46, legs 48, and flange 50 preferably define an integral discriminator member. The discriminator member preferably is formed of a homogeneous organic polymeric material. As appreciated, the discriminator member may include multiple separate parts and may be formed of any suitable material.

The valve portion 16 includes a bottom 40 supporting the baffle barrier 32 and defining the vent opening 28. The bottom 40 of the integral casing defines an annular valve seat 64 extending or projecting downwardly. An outer wall 42 extends from the bottom 40 and is spaced from and surrounds the rim 38 for defining a collection reservoir for liquid fuel. The baffle barrier 32 includes drain holes 44 for draining liquid from the reservoir back through the vent opening 28. The baffle barrier 32, bottom 40 and outer wall 42 are all defined by an integral casing, preferably formed of an organic polymeric material. The integral casing may include multiple separate parts and may be formed of any suitable material.

The legs 48 of the return cup 34 extending downwardly to the bottom 40 for supporting the return cup 34, as well as the entire discriminator member, on the bottom 40. The annular flange 50 engages the outer wall 42 to further support the discriminator member to the wall 42 of the valve portion 16.

The mounting cap 20 surrounds the outer wall 42 of the casing and defines the vapor outlet connector 22 for conveying vapors from the passages 52 in the annular flange 50 of the discriminator member. The integral casing and the cap 20 include a first tongue and groove connection 76 interconnecting the integral casing and the cap 20.

The float portion 18 defines a float cavity in which the float 30 is vertically movable between an open position spaced from the vent opening 28 and a closed position seating against and sealing the vent opening 28. The float cavity is defined by an extension of the integral casing which extends downwardly from the bottom 40. The float 30 includes a buoyant cylindrical section 31 having a closed top end connected to the top of a stem or shaft 54. The cylindrical section 31 is hollow with an open lower end and includes diametrically opposed openings 86 for allowing liquid to pass into a hollow interior of the cylindrical section 31. Openings 86 are spaced from the closed upper end of cylindrical section 31 so that a vapor chamber is defined having a sufficient volume to enable the float 30 to float in response to the filling liquid fuel.

A valve seal 56 is secured to the upper closed end of the cylindrical section 31 for sealing engagement with the vent opening 28 to close the float 30 when in the closed position. As illustrated, the seal 56 is flexible and snapped into engagement with a button integral with the top end of the cylindrical section 31. Preferably, the seal 56 engages the valve seat 64, which extends into the float cavity. The stem 54 extends from the top end of the cylindrical section 31 of the float 30 downwardly to a lower end 58.

A guide disk 60 extends about the lower end of the float cavity and has an opening receiving the stem 54 for guiding and stabilizing movement of the float 30 in the float cavity. The guide disk 60 includes openings 84 for allowing liquid to pass therethrough between the funnel-shaped element 68 and the float cavity. A spring 62 acts between the guide disk 60 and the top of the stem 54 for biasing the stem 54, as well as the entire float 30, toward the closed position.

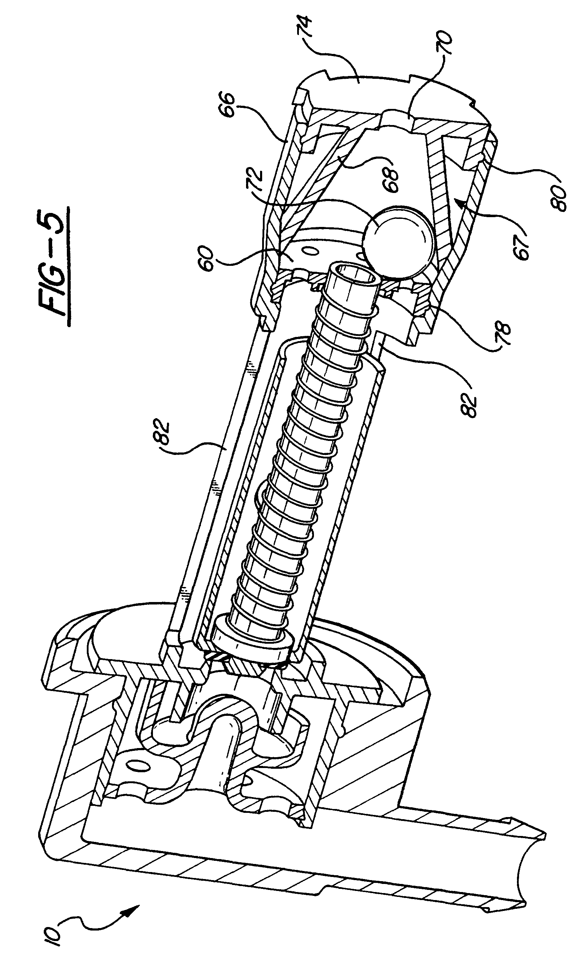

Referring also to Figure 5, a skirt 66 depends from the float portion 18 of the integral casing. A gravity responsive device 67 is supported in the skirt 66 of the float portion 18. The gravity responsive device 67 is supported below the guide disk 60 for engaging the distal end 58 of the stem 54 and for moving the float 30 upwardly to seal with the seat 64 and close the vent opening 28 in response to a predetermined amount of deviation from vertical.

The gravity responsive device 67 includes a funnel shaped element 68 extending from a large diameter adjacent the guide disk 60 to a small diameter at the bottom thereof. A ball-seat opening 70 is defined in the small diameter and a ball 72, preferably made of steel, is normally disposed over the ball-seat opening 70. A support wheel 74 extends radially from the small diameter to engage the skirt 66 to support the funnel-shaped element 68 in the skirt 66. The guide disk 60 is also supported in the skirt 66. A second tongue and groove connection 78 interconnects the disk 60 and the skirt 66. The wheel 74 and the funnel-shaped element 68 are integral and consist of an organic polymeric material and include a third tongue and groove connection 80 interconnecting the wheel 74 and the skirt 66.

The invention provides a fill limit control valve assembly with an integrated liquid/vapor discriminator member. During normal refilling of the fuel tank 12, the fuel level in the tank 12 rises and vapor is displaced. This causes a constant vapor flow to the canister 24. In particular, the vapors pass through the openings 82 and upwardly through the float cavity. The vapors then pass through the vent opening 28 and are then diverted by the bullet 46. The vapors pass over the baffle barrier 32 between the barrier 32 and base 36. The vapors are forced to complete a U-turn by the depending rim 38. The vapors then continue upward through the passages 52 in the flange 50 and out through the connector 22 and into the vapor canister 24. The vapors are purified by the canister 24 and exhausted to the atmosphere.

The baffle barrier 32, in conjunction with the return cup 34, condenses fuel and fuel mist that travels with the vapor flow and retains any liquid in the reservoir established between the wall 42 and the baffle barrier 32. As appreciated, a small amount of fuel mist and/or liquid may become trapped in the reservoir. This retained mist and/or liquid drains back into the tank 12 through the drain holes or slits 44 in the baffle barrier 32 once the vent opening 28 is reopened.

During normal filling of the fuel tank 12, at least a portion of the liquid fuel also passes through the openings 82 and into the float cavity. The liquid fuel also passes through openings 84 in the guide disk 60 such that liquid fuel is accumulating below and within the float 30. In particular, liquid fuel is disposed between the stem 54 and the cylindrical section 31. The displaced vapor within the float 30 passes out of opening 86 within the cylindrical section 31. This process continues until the level of liquid fuel within the fuel tank 12 reaches the level above the opening 86 in the cylindrical section 31. At this point, no additional vapors can pass through the opening 86 and the vapors disposed between the top of the cylindrical section 31 and the opening 86 are trapped within the upper end of the hollow interior of the cylindrical section 31, thereby increasing the buoyancy of the float 30 allowing the float 30 to move responsively upwardly to the closed position.

As the level of liquid in the fuel tank 12 continues to rise, the float 30 will move from the open position, as shown in Figure 3, to the closed position, as shown in Figure 4. The upward movement of the float 30 occurs because of the buoyancy of the float 30, created by the trapped vapor, in relation to the rising liquid and the upward pushing force from the spring 62. Hence, when a predetermined level of fuel in the tank 12 is reached, the float 30 completely rises and, with the assistance of the spring 62, seals the seat 64 with the seal 56. The float 30 is therefore movably supported by the float portion 18 for moving to the closed position seating against and sealing the vent opening 28 in response to the float 30 rising to a predetermined fuel level, i.e., full.

Upon closure of the vent opening 28, the fuel tank 12 no longer has an exhaust avenue for the vapor such that pressure builds up in the tank 12 and corresponding filler neck 23. This pressure build-up triggers the filling nozzle to shut off and stops the refilling of the fuel tank 12.

As the liquid fuel in the fuel tank 12 is used, the level of liquid fuel will lower which subsequently lowers the float 30 within the float cavity. As appreciated, the liquid fuel will flow out of the float cavity through the openings 82. When the float 30 lowers, the vent opening 28 is reopened such that any trapped mist and liquid can flow back into the float cavity through the drain holes 44. The surface tension of the fuel in the float 30 would cause the fuel to remain in the cylindrical float 30 except that the stem 54 helps to purge the fuel by breaking this surface tension.

During a vehicle rollover, the steel ball 72 will disengage from the ball-seat opening 70. Preferably, the steel ball 72 starts to roll out of the normal position when the vehicle is tilted more than 70°. As the steel ball 72 moves upward along the funnel-shaped element, the ball 72 engages the distal end 58 of the stem 54 to push the stem 54 into the closed position sealing the fuel tank 12. As appreciated, the ball 72 may be of any suitable design, material and weight so long as the stem 54 is adequately pushed upward against the valve seat 64. During the rollover, the cylindrical section 31 of float 3 0 will be in an inverted condition and will therefore fill with liquid fuel such that the float 30 is no longer buoyant. The float 30 is responsively forced to the closed position, against the valve seat 64 by the spring 62 preventing fuel from passing through opening 28.

Many modifications and variations of the present invention are possible in light of the above teachings. The invention may be practiced otherwise than as specifically described within the scope of the appended claims.

## Claims

1. A fill limit control valve assembly (10) adapted for disposition in a vehicle fuel tank (12), said valve assembly (10) comprising;
a housing (14) having a valve portion (16) with an outlet connector (22) adapted for connection to a fuel tank (12) and a float portion (18) for extending into the fuel tank (12),
said valve portion (16) defining a vent opening (28) for venting vapors from the fuel tank (12), via said outlet connector (22).
a float (30) movably supported by said float portion (18) for movement between an open position spaced from said vent opening (28) and a closed position seating against and sealing said vent opening (28), and
a liquid fuel trap disposed above said vent opening (28) to limit liquid fuel flow therethrough to said outlet connector (22), **characterized in that**
said liquid fuel trap includes a baffle barrier (32) surrounding said vent opening (28), and a return cup (34) having a base (36) overlying said baffle barrier (32) with a dependent rim (38) surrounding said baffle barrier (32) for forcing the flow of said vapors from said vent opening (28) through a U-turn, and legs (48) extending downwardly from said rim (38) to support said liquid fuel trap in said valve portion (16).

2. An assembly as set forth in claim 1 wherein said valve portion (16) includes a bottom (40) supporting said baffle barrier (32) and defining said vent opening (28) and an outer wall (42) extending from said bottom (40) and spaced from and surrounding said rim (38) for defining a collection reservoir below said rim (38).

3. An assembly as set forth in claim 2 wherein said baffle barrier (32) includes drain holes (44) for draining liquid from said reservoir back through said vent opening (28).

4. An assembly as set forth in claim 3 wherein said return cup (34) includes a bullet (46) extending from said base (36) thereof and into said baffle barrier (32) to define an annular passage for dividing said vapor flow from said vent opening (28).

5. An assembly as set forth in claim 4 further including legs (48) extending downwardly from said rim (38) to said bottom (40) for supporting said return cup (34) on said bottom (40).

6. An assembly as set forth in claim 5 wherein said bullet (46) extends above said base (36) of said return cup (34) and including an annular flange (50) extending radially of said bullet (46) to engage said outer wall (42), said flange (50) defining passages (52) therethrough for the passage of said vapors through said flange (50).

7. An assembly as set forth in claim 6 wherein said float portion (18) defines a float cavity in which said float (30) is vertically movable between said open and closed positions, said float (30) includes a cylindrical section (31) which traps vapor during normal fuel filling to enable the float (30) to responsively move to the closed position and which collects liquid fuel when in an inverted rollover condition to responsively move to the closed position.

8. An assembly as set forth in claim 7 wherein said float (30) further including a valve seal (56) at a top end for sealing engagement with said vent opening (28) to close same when in said closed position, a stem (54) extending from said top end of said float (30) downwardly to a distal end (58).

9. An assembly as set forth in claim 8 further including a guide disk (60) extending across said float cavity and in sliding engagement with said stem (54) for guiding and stabilizing said movement of said float (30) in said float cavity between said positions.

10. An assembly as set forth in claim 9 wherein said valve seal (56) is supported on said top of said buoyant cylindrical section (31).

11. An assembly as set forth in claim 10 further including a gravity responsive device (67) supported by said float portion (18) below said guide disk (60) for engaging said distal end (58) of said stem (54) and for moving said float (30) upwardly to seal said vent opening (28) in response to a predetermined amount of deviation from vertical.

12. An assembly as set forth in claim 11 further including a spring (62) reacting between said guide disk (60) and said top of said stem (54) for biasing said stem (54) toward said closed position.

13. An assembly as set forth in claim 12 wherein said baffle barrier (32), said bottom (40) and said outer wall (42) define an integral casing.

14. An assembly as set forth in claim 13 wherein said return cup (34), said base (36), said bullet (46), said legs (48), and said flange (50) define an integral discriminator member.

15. An assembly as set forth in claim 14 wherein said housing (14) includes a mounting cap (20) surrounding said outer wall (42) of said casing and defining said outlet connector (22) for conveying said vapors from said annular flange (50) of said discriminator member.

16. An assembly as set forth in claim 15 wherein said bottom (40) of said integral casing defines an annular valve seat (64) extending downwardly into said float cavity.

17. An assembly as set forth in claim 16 wherein said integral casing extends downwardly from said bottom (40) to further define said float cavity with a skirt (66) depending therefrom.

18. An assembly as set forth in claim 17 wherein said gravity responsive device (67) is supported in said skirt (66).

19. An assembly as set forth in claim 18 wherein said gravity responsive device (67) includes a funnel-shaped element (68) extending from a large diameter adjacent said guide disk (60) to a small diameter, a ball-seat opening (70) in said small diameter, and a ball (72) normally disposed over said ball-seat opening (70).

20. An assembly as set forth in claim 19 wherein said guide disk (60) is supported in said skirt (66).

21. An assembly as set forth in claim 20 including a support wheel (74) extending radially from said small diameter to engage said skirt (66) to support said funnel-shaped element (68) in said skirt (66).

22. An assembly as set forth in claim 21 wherein said float portion (18) includes openings (82) for allowing liquid to pass therethrough from the fuel tank (12) into said float cavity, said guide disk (60) includes openings (84) for allowing liquid to pass therethrough from said funnel-shaped element (68) to said float cavity, and said buoyant cylindrical section (31) being hollow with an open distal end and including openings (86) for allowing liquid to pass into a hollow interior of said buoyant cylindrical section (31).

23. An assembly as set forth in claim 22 wherein said integral casing and said cap (20) consist of an organic polymeric material and including a first tongue and groove connection (76) interconnecting said integral casing and said cap (20), said disk (60) consisting of an organic polymeric material and including a second tongue and groove connection (78) interconnecting said disk (60) and said skirt (66), said wheel (74) and said funnel-shaped element (68) being integral and consisting of an organic polymeric material and including a third tongue and groove connection (80) interconnecting said wheel (74) and said skirt (66).

## Patentansprüche

1. Ventilanordnung (10) zur Füllbegrenzungskontrolle, die in einem Fahrzeugkraftstofftank (12) angeordnet werden kann, wobei die Ventilanordnung (10) umfasst,
ein Gehäuse (14), das einen Ventilabschnitt (16) mit einem für eine Verbindung mit einem Kraftstofftank (12) geeigneten Auslassverbindungselement (22) und einen Schwimmerabschnitt (18) aufweist, der sich in den Kraftstofftank (12) erstreckt,
wobei der Ventilabschnitt eine Entlüftungsöffnung (28) für eine Entlüftung von Dämpfen aus dem Kraftstofftank (12) über das Auslassverbindungselement (22) bildet,
einen Schwimmer (30), der durch den Schwimmerabschnitt (18) für eine Bewegung zwischen einer offenen Stellung im Abstand von der Entlüftungsöffnung (28) und einer geschlossenen Stellung bewegbar gelagert ist, in der er an der Ventilöffnung (28) anliegt und sie abdichtet , und
eine Flüssigkraftstofffalle, die oberhalb der Entlüftungsöffnung (28) angeordnet ist, um die Flüssigkraftstoffströmung durch diese zu dem Auslassverbindungselement (22) zu begrenzen, **dadurch gekennzeichnet, dass**
die Flüssigkraftstofffalle eine die Entlüftungsöffnung (28) umgebende Prallbarriere (32) und einen Rückkehrnapf (34) umfasst, der eine Basis (36), die die Prallbarriere (32) mit einem herunterhängenden Rand (38) übergreift, der die Prallbarriere (32) umgibt, um die Strömung der Dämpfe aus der Ventilöffnung (28) durch eine U-Umkehrung zu zwingen, und Schenkel (48) aufweist, die sich von dem Rand (38) nach unten erstrecken, um die Flüssigkraftstofffalle in dem Ventilabschnitt (16) abzustützen.

2. Anordnung nach Anspruch 1, bei der der Ventilabschnitt (16) einen Boden (40), der die Prallbarriere (32) trägt und die Entlüftungsöffnung (28) bildet, und eine Außenwand (42) umfasst, die sich von dem Boden aus (40) erstreckt und den Rand (38) im Abstand umgibt, um ein Sammelreservoir unterhalb des Randes (38) zu bilden.

3. Anordnung nach Anspruch 2, bei der die Prallbarriere (32) Ablasslöcher (44) für ein Ablassen von Flüssigkeit aus dem Reservoir zurück durch die Entlüftungsöffnung (28) umfasst.

4. Anordnung nach Anspruch 3, bei der der Rückkehrnapf (34) eine Rundnase (46) aufweist, die sich von seiner Basis (36) in die Prallbarriere (32) erstreckt, um einen Ringkanal zur Teilung der Dampfströmung aus der Entlüftungsöffnung (28) zu bilden.

5. Anordnung nach Anspruch 4, die außerdem Schenkel (48) aufweist, die sich von dem Rand (38) zu dem Boden (40) nach unten erstrecken, um den Rückkehrnapf (34) auf dem Boden (40) abzustützen.

6. Anordnung nach Anspruch 5, bei der die Rundnase (46) sich oberhalb der Basis (36) des Rückkehrnapfes (34) erstreckt, und die einen Ringflansch (50) umfasst, der sich radial von der Rundnase (46) für einen Eingriff in die Außenwand (42) erstreckt, wobei durch den Flansch (50) Durchgänge (52) für den Durchgang der Dämpfe durch den Flansch (50) hindurchgehen.

7. Anordnung nach Anspruch 6, bei der der Schwimmerabschnitt (18) einen Schwimmerraum bildet, in dem der Schwimmer (30) vertikal zwischen der offenen und der geschlossenen Stellung bewegbar ist, wobei der Schwimmer (30) einen zylindrischen Abschnitt (31) umfasst, der den Dampf während einer normalen Kraftstoffbefüllung einfängt, damit sich der Schwimmer (30) ansprechend hierauf in die geschlossene Position bewegen kann, und der den Flüssigkraftstoff sammelt, wenn er sich in einem umgekehrten Überschlagzustand befindet, um sich in Ansprechung hierauf in die geschlossene Stellung zu bewegen.

8. Anordnung nach Anspruch 7, bei der der Schwimmer (30) außerdem eine Ventildichtung (56) an dem oberen Ende für einen Dichtungseingriff mit der Entlüftungsöffnung (28) aufweist, um diese in der geschlossenen Stellung zu verschließen, wobei sich ein Schaft (54) von dem oberen Ende des Schwimmers (30) nach unten zu einem distalen Ende (58) erstreckt.

9. Anordnung nach Anspruch 8, die außerdem eine Führungsscheibe (60) umfasst, die sich quer über den Schwimmerhohlraum erstreckt und in Gleiteingriff mit dem Schaft (54) steht, um die Bewegung des Schwimmers (30) in dem Schwimmerraum zwischen den Stellungen zu führen und zu stabilisieren.

10. Anordnung nach Anspruch 9, bei der die Ventildichtung (56) auf der Oberseite des Auftriebzylinderabschnitts (31) gelagert ist.

11. Anordnung nach Anspruch 10, die außerdem eine Schwerkraftreaktionsvorrichtung (67) umfasst, die durch den Schwimmerabschnitt (18) unterhalb der Führungsscheibe (60) gehalten ist, um an dem distalen Ende (58) des Schaftes (54) anzugreifen und um den Schwimmer (30) in Ansprechung auf eine vorherbestimmte Abweichungsgröße von der Vertikalen nach oben zur Abdichtung der Entlüftungsöffnung (28) zu bewegen.

12. Anordnung nach Anspruch 11, die außerdem eine Feder (62) umfasst, die zwischen der Führungsscheibe (60) und der Oberseite des Schaftes (54) reagiert, um den Schaft (54) in Richtung der geschlossenen Stellung vorzuspannen.

13. Anordnung nach Anspruch 12, bei der die Prallbarriere (52), der Boden (40) und die Außenwand (42) ein einteiliges Gehäuse bilden.

14. Anordnung nach Anspruch 13, bei der der Rückkehrnapf (34), die Basis (36), die Rundnase (46), die Schenkel (48) und der Flansch (50) ein einteiliges Diskriminatorelement bilden.

15. Anordnung nach Anspruch 14, bei der das Gehäuse (14) eine Montagekappe (20) aufweist, die die Außenwand (42) des Gehäuses umgibt und das Auslassverbindungselement (22) für eine Förderung der Dämpfe aus dem Ringflansch (50) des Diskriminatorelements bildet.

16. Anordnung nach Anspruch 15, bei der der Boden (40) des einteiligen Gehäuses einen ringförmigen Ventilsitz (64) bildet, der sich nach unten in den Schwimmerraum erstreckt.

17. Anordnung nach Anspruch 16, bei der sich das einteilige Gehäuse von dem Boden (40) nach unten erstreckt, um außerdem den Schwimmerraum mit einer von diesem sich nach unten erstreckenden Einfassung (66) zu bilden.

18. Anordnung nach Anspruch 17, bei der die Schwerkraftreaktionsvorrichtung (67) in der Einfassung (66) gelagert ist.

19. Anordnung nach Anspruch 18, bei der die Schwerkraftreaktionsvorrichtung (67) ein trichterförmiges Element (68), dass sich von einem großen Durchmesser angrenzend an die Führungsscheibe (60) zu einem kleinen Durchmesser erstreckt, eine Kugelsitzöffnung (70) in dem kleinen Durchmesser, und eine Kugel (72) aufweist, die normalerweise über der Kugelsitzöffnung (70) angeordnet ist.

20. Anordnung nach Anspruch 19, bei der die Führungsscheibe (60) in der Einfassung (66) gelagert ist.

21. Anordnung nach Anspruch 20, die eine Haltescheibe (74) aufweist, die sich radial von dem kleinen Durchmesser aus erstreckt und an der Einfassung (66) angreift, um das trichterförmige Element (68) in der Einfassung (66) zu halten.

22. Anordnung nach Anspruch 21, bei der der Schwimmerabschnitt (18) Öffnungen (82) umfasst, damit die Flüssigkeit durch sie hindurch aus dem Kraftstofftank (12) in den Schwimmerraum hindurchgehen kann, wobei die Führungsscheibe (60) Öffnungen (84) umfasst, damit die Flüssigkeit durch sie aus dem trichterförmigen Element (68) in den Schwimmerraum hindurchgehen kann, und wobei der zylindrische Auftriebsabschnitt (31) hohl ist und ein offenes distales Ende aufweist und Öffnungen (86) umfasst, damit die Flüssigkeit in einen hohlen Innenraum des Auftriebszylinderabschnitt (81) strömen kann.

23. Anordnung nach Anspruch 22, bei der das einteilige Gehäuse und die Kappe (20) aus einem organischen Polymermaterial bestehen und eine erste Nut- und Feder-Verbindung (46) aufweisen, die das einteilige Gehäuse und die Kappe (20) miteinander verbindet, wobei die Scheibe (60) aus einem organischen Polymermaterial besteht und eine zweite Nut- und Feder-Verbindung (78) aufweist, die die Scheibe (60) und die Einfassung (66) miteinander verbindet, wobei die Scheibe (74) und das trichterförmige Element (68) einteilig ausgebildet sind und aus einem organischen Polymermaterial bestehen und eine dritte Nut- und Feder-Verbindung (80) aufweisen, die die Scheibe (74) und die Einfassung (66) miteinander verbindet.

## Revendications

1. Ensemble de soupape de contrôle de limite de remplissage (10) conçu pour être disposé dans un réservoir de carburant de véhicule (12), ledit ensemble de soupape (10) comprenant :
un boîtier (14) ayant une partie soupape (16) avec un raccord de sortie (22) conçu pour être raccordé à un réservoir de carburant (12), et une partie flotteur (18) conçue pour s'étendre dans le réservoir de carburant (12),
ladite partie soupape (16) définissant un orifice d'évent (28) pour évacuer les vapeurs du réservoir de carburant (12) par ledit raccord de sortie (22),
un flotteur (30) supporté en mouvement par ladite partie flotteur (18), conçue pour se déplacer entre une position ouverte espacée dudit orifice d'évent (28) et une position fermée s'appuyant contre ledit orifice d'évent (28) et fermant alors celui-ci, et
un séparateur de carburant liquide disposé au-dessus dudit orifice d'évent (28) pour limiter l'écoulement de carburant liquide à travers celui-ci vers ledit raccord de sortie (22), **caractérisé en ce que**
ledit séparateur de carburant liquide comprend un déflecteur (32) entourant ledit orifice d'évent (28), et une coupelle de retour (34) ayant une base (36) recouvrant ledit déflecteur (32) avec un rebord dépendant (38) entourant ledit déflecteur (32) pour forcer l'écoulement desdites vapeurs dudit orifice d'évent (28) à travers un coude en U, et des jambes (48) s'étendant vers le bas à partir dudit rebord (38) pour supporter ledit séparateur de carburant liquide dans ladite partie soupape (16).

2. Ensemble selon la revendication 1, dans lequel ladite partie soupape (16) inclut une partie inférieure (40) supportant ledit déflecteur (32) et définissant ledit orifice d'évent (28), et une paroi extérieure (42) s'étendant à partir de ladite partie inférieure (40) en étant espacée dudit rebord (38) et entourant celui-ci pour définir un réservoir de récupération sous ledit rebord (38).

3. Ensemble selon la revendication 2, dans lequel ledit déflecteur (32) inclut des trous d'évacuation (44) pour évacuer le liquide à partir dudit réservoir à travers ledit orifice d'évent (28).

4. Ensemble selon la revendication 3, dans lequel ladite coupelle de retour (34) inclut une partie arrondie (46) s'étendant à partir de ladite base (36) de celle-ci et à l'intérieur dudit déflecteur (32) afin de définir un passage annulaire pour séparer ledit écoulement de vapeurs dudit orifice d'évent (28).

5. Ensemble selon la revendication 4, incluant en outre des jambes (48) s'étendant vers le bas à partir dudit rebord (38) vers ladite partie inférieure (40) pour supporter ladite coupelle de retour (34) sur ladite partie inférieure (40).

6. Ensemble selon la revendication 5, dans lequel ladite partie arrondie (46) s'étend au-dessus de ladite base (36) de ladite coupelle de retour (34), et inclut une bride annulaire (50) s'étendant radialement par rapport à ladite partie arrondie (46) pour s'engager avec ladite paroi extérieure (42), ladite bride (50) définissant des passages (52) au travers de celle-ci pour le passage desdites vapeurs à travers ladite bride (50).

7. Ensemble selon la revendication 6, dans lequel ladite partie flotteur (18) définit une cavité de flotteur dans laquelle ledit flotteur (30) peut être déplacé verticalement entre lesdites positions ouverte et fermée, ledit flotteur (30) incluant une section cylindrique (31) qui sépare la vapeur pendant le remplissage normal du carburant pour permettre au flotteur (30) de se déplacer en réponse à cette condition vers la position fermée, et qui récupère le carburant liquide lorsqu'il se trouve dans un état de retournement inversé pour se déplacer en réponse à cette condition vers la position fermée.

8. Ensemble selon la revendication 7, dans lequel ledit flotteur (30) inclut en outre un joint de soupape (56) à une extrémité supérieure pour assurer un engagement d'étanchéité avec ledit orifice d'évent (28) afin de fermer celui-ci lorsqu'il se trouve dans ladite position fermée, et une tige (54) s'étendant à partir de ladite extrémité supérieure dudit flotteur (30) vers le bas jusqu'à une extrémité distale (58).

9. Ensemble selon la revendication 8, incluant en outre un disque de guidage (60) s'étendant sur la largeur de la cavité de flotteur et étant en engagement de coulissement avec ladite tige (54) pour guider et stabiliser ledit déplacement dudit flotteur (30) dans ladite cavité de flotteur entre lesdites positions.

10. Ensemble selon la revendication 9, dans lequel ledit joint de soupape (56) est supporté par ladite partie supérieure de ladite section cylindrique flottante (31).

11. Ensemble selon la revendication 10, incluant en outre un dispositif apte à répondre à la gravité (67), supporté par ladite partie flotteur (18) sous ledit disque de guidage (60) pour s'engager avec ladite extrémité distale (58) de ladite tige (54), et pour déplacer ledit flotteur (30) vers le haut afin d'étanchéifier ledit orifice d'évent (28) en réponse à une quantité prédéterminée de déviation par rapport à la verticale.

12. Ensemble selon la revendication 11, incluant en outre un ressort (62) réagissant entre ledit disque de guidage (60) et ladite partie supérieure de ladite tige (54) pour solliciter ladite tige (54) vers ladite position fermée.

13. Ensemble selon la revendication 12, dans lequel ledit déflecteur (32), ladite partie inférieure (40) et ladite paroi extérieure (42) définissent un boîtier intégral.

14. Ensemble selon la revendication 13, dans lequel ladite coupelle de retour (34), ladite base (36), ladite partie arrondie (46), et ladite bride (50) définissent un élément discriminateur intégral.

15. Ensemble selon la revendication 14, dans lequel ledit boîtier (14) inclut un chapeau de fixation (20) entourant ladite paroi extérieure (42) dudit boîtier, et définissant ledit raccord de sortie (22) pour acheminer lesdites vapeurs à partir de ladite bride annulaire (50) dudit élément discriminateur.

16. Ensemble selon la revendication 15, dans lequel ladite partie inférieure (40) dudit boîtier intégral définit un siège de soupape annulaire (64) s'étendant vers le bas à l'intérieur de ladite cavité de flotteur.

17. Ensemble selon la revendication 16, dans lequel ledit boîtier intégral s'étend vers le bas à partir de ladite partie inférieure (40) pour définir en outre ladite cavité de flotteur avec une jupe (66) dépendant de celle-ci.

18. Ensemble selon la revendication 17, dans lequel ledit dispositif apte à répondre à la gravité (67) est supporté par ladite jupe (66).

19. Ensemble selon la revendication 18, dans lequel ledit dispositif apte à répondre à la gravité (67) inclut un élément en forme d'entonnoir (68) s'étendant depuis un grand diamètre adjacent audit disque de guidage (60) jusqu'à un petit diamètre, ainsi qu'un orifice à siège de bille (70) dans ledit petit diamètre, et une bille (72) disposée normalement sur ledit orifice à siège de bille (70).

20. Ensemble selon la revendication 19, dans lequel ledit disque de guidage (60) est supporté par ladite jupe (66).

21. Ensemble selon la revendication 20, incluant une roue de support (74) s'étendant radialement à partir dudit petit diamètre pour s'engager avec ladite jupe (66) afin de supporter ledit élément en forme d'entonnoir (68) dans ladite jupe (66).

22. Ensemble selon la revendication 21, dans lequel ladite partie flotteur (18) inclut des orifices (82) pour permettre au liquide de passer au travers depuis le réservoir de carburant (12) dans ladite cavité de flotteur, ledit disque de guidage (60) incluant des orifices (84) pour permettre au liquide de passer à travers ledit élément en forme d'entonnoir (68) vers ladite cavité de flotteur, et ladite section cylindrique flottante (31) étant creuse avec une extrémité distale ouverte et incluant des orifices (86) pour permettre au liquide de passer dans une partie intérieure creuse de ladite section cylindrique flottante (31).

23. Ensemble selon la revendication 22, dans lequel ledit boîtier intégral et ledit chapeau (20) consistent en une matière polymère organique et incluent un premier assemblage à rainure et languette (76) accouplant ledit boîtier intégral et ledit chapeau (20), ledit disque (60) consistant en une matière polymère organique et incluant un deuxième assemblage à rainure et languette (78) accouplant ledit disque (60) et ladite jupe (66), ladite roue (74) et ledit élément en forme d'entonnoir (68) étant d'une pièce et consistant en une matière polymère organique et incluant un troisième assemblage à rainure et languette (80) accouplant ladite roue (74) et ladite jupe (66).
